# EUROPEAN PATENT APPLICATION

(11) **EP 4 527 346 A1**
(43) Date of publication of application: **26.03.2025**
(21) Application number: 23827320.5
(22) Date of filing: 27.02.2023
(51) Int. Cl.: A61C 17/02, A61C 17/20, A61C 17/028

(54) **ROOT CANAL CLEANING DEVICE**

(30) Priority: 21.06.2022 KR 20220075746
(71) Applicant: Seoul National University R&DB Foundation, Seoul 08826 (KR); Seoul National University Dental Hospital, Seoul 03080 (KR); Sogang University Research & Business Development Foundation, Seoul 04107 (KR)
(72) Inventor: KIM, Ho Young, Seoul 08826 (KR); KIM, Won Jung, Bucheon-si, Gyeonggi-do 14479 (KR); PARK, Ryeol, Seoul 08646 (KR); SHON, Won Jun, Seoul 06584 (KR); CHOI, Min Su, Seoul 07952 (KR); SEO, Jae Deok, Seoul 03780 (KR)
(74) Representative: Isarpatent
(86) International application number: PCT/KR2023/002745
(87) International publication number: WO 2023/249197

(57) **Abstract**

A root canal cleaning device according to one embodiment of the present invention comprises: an acoustic pressure generating unit that operates in response to the electric input; a handpiece housing that accommodates the acoustic pressure generating unit; a coolant passage formed inside the handpiece housing; a coolant inlet that communicates with the coolant passage formed inside the handpiece housing; and a cleaning solution nozzle formed in the handpiece housing, wherein an ultrasonic acoustic pressure applied to a coolant is transmitted to a cleaning solution by the acoustic pressure generating unit, and vapor bubbles are generated in the cleaning solution by the transmitted ultrasonic acoustic pressure, and target contaminants inside the tooth including the root canal is removed by the action of the vapor bubbles and the cleaning solution on a tooth being treated. The cleaning solution includes a degassed liquid.

## Description

### BACKGROUND

### 1. Field

The present invention relates to a root canal cleaning device.

### 2. Description of the Related Art

Since 1967, when Kakeyash et al. first demonstrated in germ-free rats that bacteria were the primary cause of pulpal inflammation, it has been recognized that biofilm and necrotic tissue, which are bacteria that colonize inside the root canal, are the primary causes of the inflammatory response. For successful endodontic treatment, it is essential to completely remove the bacteria and necrotic tissue present in the root canal.

The treatment process of root canals consists of three main stages: root canal formation, root canal cleaning, and root canal filling. The present invention relates to a device used for the second stage, root canal cleaning.

Root canal cleaning is performed after the primary removal of the decayed nerve with an endo file, and is essential for the removal of infectious microorganisms, which has a significant impact on the success of endodontic treatment.

Among the prior art root canal irrigation devices, passive ultrasonic irrigation (PUI) is known, which is a device that cleans the root canal by inserting a tip that fills the root canal with a cleaning solution and emits ultrasonic waves to clean the root canal, but this device requires root canal enlargement to insert the tip into the root canal and has difficulty inserting the tip in the case of highly curved root canals.

In addition to the prior art root canal irrigation devices described above, the inventors have reviewed a number of patents and papers by leading researchers in the field of root canal irrigation devices leading up to the present invention. Among them, we will introduce the technology of US Registration patent No. 8,753,121 B2 (hereinafter referred to as the "121 patent") and US Patent No. 10,420,630 B2 (hereinafter referred to as the "630 patent") of Sonendo, Inc. The above US patent technologies of Sonendo are characterized by the fact that, unlike the above PUI devices, the cleaning device does not need to be inserted directly into the root canal during root canal cleaning. This device has the advantage of not causing problems such as broken tips and enabling simultaneous cleaning of multiple root canals in a single procedure. This advantageous effect over conventional PUI devices is achieved by the present invention, as well as by the above U.S. registered patent technologies of Sonendo.

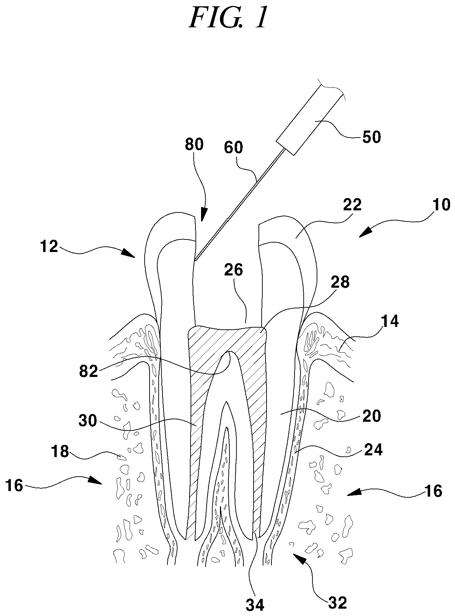

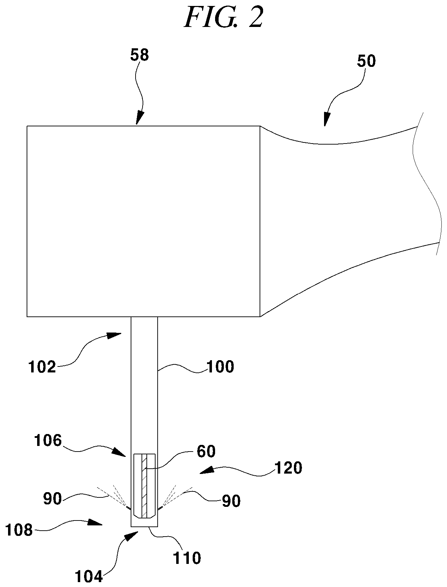

First, a representative drawing of the "121 patent is attached hereto as Figure 1. This US patent is primarily characterized by the use of a very high velocity, high pressure jet of cleaning solution called a liquid jet to clean a root canal. According to the specification, liquid jet refers to a high-velocity and high-pressure fluid dispensed by a high-pressure pump system. In FIG. 1, the liquid jet is indicated by drawing symbol 60 and is depicted as a straight line striking the inner surface of the tooth. According to the specification, the pressure is 7,000 psi (about 48,263 kPa) or more, and the velocity is 50 m/s or more. There are two reasons for using such a high-speed and high-pressure jet: the first reason is to generate vapor bubbles; and the second reason is to generate acoustic waves in the process of impacting the liquid jet against the dentin, which is the hard tissue inside the tooth. The vapor bubbles and acoustic waves help to separate the biofilm and/or necrotic tissue that is targeted for removal during root canal cleaning. However, in this prior art using a liquid jet, a problem arises due to the high velocity and high pressure of the liquid jet. The liquid jet has very high velocity and high pressure, which poses a safety issue when directed directly into the root canal. While the liquid jet poses a safety concern when directed directly inside the root canal, it can pose an even greater safety concern when it contacts other soft tissues in the oral cavity. Therefore, in this technique, the liquid jet must be reflected onto the dentin hard tissue of the tooth wall, as shown in Figure 1, and then the reflected cleaning solution is introduced into the root canal. The problem with this technique is that it is difficult to aim the liquid jet accurately, which makes the procedure burdensome for less skilled operators. Therefore, in order to use the liquid jet disclosed in the "121 patent of Sonendo, an additional structure is required to solve the safety problem. Such a structure is disclosed in the "630 patent, which is an improvement of the "121 patent. A representative drawing of the "630 patent is attached as FIG. 2.

As shown in FIG. 2, the "630 patent discloses that the liquid jet 60 is guided along a guide tube, indicated by drawing symbol 100, and ultimately impinges on an impingement member, a component at the distal end of which is labeled an impingement member, indicated by drawing symbol 110, to introduce a spreading stream of water into the root canal. The specification of the "630 patent explains why this is done as follows.

"Embodiments of the guide tube 100 which include an impingement member 110 may reduce or prevent possible damage that may be caused by the jet during certain dental treatments. For example, use of the impingement member 110 may reduce the likelihood that the jet may undesirably cut tissue or propagate into the root canal spaces 30 (which may undesirably pressurize the canal spaces in some cases)."

The above-quoted portion of the specification of the "630 patent describes the problems caused by the use of liquid jets, namely damage to the patient, and describes the function of the impingement member 110 as a component introduced to solve the problem of cutting tissue or increasing the pressure inside the root canal to a level that poses a safety concern. It is this impingement member 110 that is the key element of the "630 patent.

The inventors have identified the following problems with the prior art cleaning devices recited in the above-described U.S. Sonendo patents. First, specialized high-pressure pumps must be used to generate high velocity and high-pressure fluids of the magnitude disclosed in the above-described U.S. patents. In addition, the durability of the high-pressure generating unit, such as the pump, as well as the fluid passages, such as the fluid tubing through which the high-pressure fluid flows, must be maintained at a special level. Furthermore, additional components such as the impingement member introduced in the '603 patent are required. This in turn complicates the structure of the equipment for cleaning treatment and increases the production cost of the equipment. Furthermore, the aforementioned safety issues, i.e., cutting the patient's oral tissues or excessively increasing the pressure in the root canal, cannot be fundamentally solved by using a high-speed, high-pressure liquid jet.

Following the identification of these problems, the inventors realized the need to develop a device that can maximize cleaning efficiency while using a relatively low-speed, low-pressure cleaning solution than the high-speed and high-pressure cleaning solution used in the above US patent, and continued research and development efforts, resulting in the present invention.

### SUMMARY OF THE INVENTION

The object of the present invention is, during cleaning procedure, to provide a cleaning device that does not require root canal expansion on a root canals, may enable effective cleaning even for highly curved root canals, and may be cleaned without directly inserting the cleaning device into the root canal, thus eliminating the problem of tip breakage and enabling simultaneous cleaning of multiple root canals in a single procedure.

Furthermore, the object of the present invention is to provide a cleaning device that can maximize the cleaning effect while spraying a cleaning solution at a low speed and low pressure compared to a conventional technology that uses a high-speed and high-pressure solution jet for root canal cleaning.

Furthermore, the object of the present invention is to provide a cleaning device comprising an ultrasonic vibration structure that sprays a cleaning solution at a low speed and low pressure, and that is capable of effectively generating vapor bubbles even in an condition where a degassed liquid (degassed liquid, since the use of the term "degassed liquid" is common in the art, hereinafter the English term degassed liquid will be used in conjunction with the Korean term or alone) is used as a cleaning solution.

Furthermore, the object of the present invention is to provide a cleaning device with a structure that facilitates the transmission of ultrasonic vibrations into the inside of the tooth.

Furthermore, the object of the present invention is to provide a cleaning device that can prevent gas bubbles from blocking the root canal passage, which cannot be completely prevented from occurring even by using a degassed liquid.

A root canal cleaning apparatus according to one embodiment of the present invention includes an acoustic pressure generating unit that operates in response to electrical input; a handpiece housing that accommodates the acoustic pressure generating unit; a coolant passage formed inside the handpiece housing; a coolant inlet that communicates with the coolant passage formed inside the handpiece housing; and a cleaning solution nozzle formed in the handpiece housing, wherein an ultrasonic acoustic pressure applied to a coolant is transmitted to a cleaning solution by the acoustic pressure generating unit, and vapor bubbles are generated in the cleaning solution by the transmitted ultrasonic acoustic pressure, and target contaminant inside the tooth including the root canal is removed by acting the vapor bubbles and the cleaning solution on a tooth being treated. The cleaning solution includes a degassed liquid.

The coolant cools the acoustic pressure generating unit, and the coolant includes a degassed liquid.

The acoustic pressure generating unit includes a vibrator that vibrates in response to the electric input, and a ultrasonic horn that is connected to the vibrator, vibrates and has a shape extending in a straight line.

A jet stream formed within the root canal by the cleaning solution nozzle discharges gas bubbles blocking a passage of the root canal and/or contaminants detached from the root canal to an outside of the root canal.

The handpiece housing has a bent shape at one end, and an acoustic reflector is positioned at the bent shape, such that the ultrasonic waves applied to the coolant by the ultrasonic horn are reflected by the acoustic reflector.

The acoustic reflector is inclined at a predetermined angle with respect to the cross section of the ultrasonic horn.

A bubble trapping region is formed on an upper surface of the handpiece housing, and the bubble trapping region traps bubbles that gather near the acoustic reflector and rise by buoyancy.

The cleaning solution nozzle is configured with a specified legnth to spray the cleaning solution into an access cavity of the tooth during root canal cleaning.

In addition, additional configurations may be further included in a cleaning device according to the invention.

According to the present invention, during cleaning procedure a cleaning device is provided that does not require root canal expansion for root canals, may enable effective cleaning even for highly curved root canals, and may perform cleaning without directly inserting the cleaning device into the root canal, thus eliminating the problem of tip breakage and enabling simultaneous cleaning of multiple root canals in a single procedure.

Furthermore, according to the present invention, a cleaning device is provided that may maximize cleaning efficiency while spraying a cleaning solution at a low speed and low pressure compared to a conventional technology that uses a high-speed and high-pressure liquid jet for root canal cleaning.

Further, according to the present invention, there is provided a cleaning device comprising an ultrasonic vibration structure capable of effectively generating vapor bubbles even when spraying a cleaning solution at low speed and low pressure, with a degassed liquid used as the cleaning solution.

Further, according to the present invention, a cleaning device is provided which is structured to facilitate the transmission of ultrasonic vibrations into the inside of the tooth.

Furthermore, according to the present invention, a cleaning device is provided that may prevent gas bubbles from blocking the root canal passage, which may not be completely prevented from occurring even by using a degassed liquid.

### BRIEF DESCRIPTION OF THE DRAWINGS

FIG. 1 is a representative drawing of the US patent ("121 patent ) of the prior art described in the Background section.
FIG. 2 is a representative drawing of the US patent ("630 patent) of the prior art described in the Background section.
Figure 3 summarizes the differences between the properties of gas bubbles and vapor bubbles discovered through research by the inventors of the present invention.
FIG. 4 is a photograph of a conventional dental cleaning device.
FIG. 5 is a photograph of the combined vibrator and ultrasonic horn of a prototype cleaning device according to one embodiment of the present invention.
FIG. 6 illustrates the functionality of an acoustic reflector used in a cleaning device schematically according to one embodiment of the present invention.
Figure 7 illustrates the principle of ultrasonic transmission by acoustic reflectors.
Figure 8 shows a diagram of how the vibrations are redirected by an acoustic reflector to reach the tooth.
Figure 9 shows a diagram of an experiment to verify the performance of an acoustic reflector through ultrasonic power measurement.
Figure 10 illustrates the overall structure of a cleaning device according to one embodiment of the present invention.
Figure 11 illustrates the function of a vapor bubble and nozzle in root canal cleaning.
Figure 12 shows a photograph of a gas bubble blocking a root canal model and preventing cleaning.
FIG. 13 illustrates a experiment to evaluate the risk of apical extrusion induced by nozzle7 used in a cleaning device according to one embodiment of the present invention.
FIG. 14 illustrates air bubbles being trapped in a region provided in the handpiece housing of a cleaning device according to one embodiment of the present invention.
FIG. 15 is a photograph of the results of cleaning a root canal model using a prototype cleaning device according to one embodiment of the present invention.

### DETAILED DESCRIPTION OF THE INVENTION

The following detailed description of the present invention refers to the accompanying drawings, which illustrate, by way of example, certain embodiments in which the invention may be practiced. These embodiments are described in sufficient detail to enable those skilled in the art to practice the present invention. It is to be understood that the various embodiments of the present invention are different from one another, but need not be mutually exclusive. For example, certain shapes, structures, and features described herein may be implemented with changes from one embodiment to another without departing from the spirit and scope of the present invention. It is also to be understood that the location or arrangement of individual components within each embodiment may also be changed without departing from the spirit and scope of the invention. Accordingly, the detailed description that follows is not intended to be limiting, and the scope of the invention is to be taken to include all that is claimed by the claims of the appended patent application and all equivalents thereof.

In the following, various preferred embodiments of the present invention will be described in detail with reference to the accompanying drawings, in order to facilitate the practice of the present invention by one having ordinary skill in the technical field to which it belongs.

### <gas bubble and vapor bubble>.

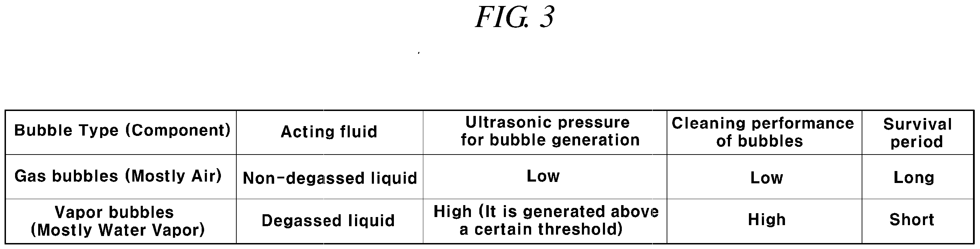

FIG. 3 is a table that summarizes the differences in properties between gas bubbles and vapor bubbles that have been discovered in the inventors' research. As summarized in the table in FIG. 3, gas bubbles and vapor bubbles have different characteristics. Gas bubbles have a long survival time and occur in large numbers at the same time. Individual gas bubbles tend to move along the surface and clean particles with relatively weak force in a small area near the bubble. Vapor bubbles, on the other hand, have a relatively short survival time, but the intensity of their motion during their survival time is high, resulting in relatively strong cleaning of a large area at a single point. Although both bubbles with different characteristics are beneficial for cleaning, the inventors pursued the generation of vapor bubbles. The first reason is that they recognized the fatal shortcomings of gas bubbles in root canal cleaning. The inventors' research has shown that gas bubbles cause bubble clogging in narrow and long root canals, and that it is impossible to effectively clean the distal end of narrow and thin root canals without resolving this bubble clogging. The second reason is that the relatively higher kinetic intensity of vapor bubbles compared to gas bubbles results in better cleaning performance.

In accordance with the goal setting to pursue the generation of only vapor bubbles in the cleaning solution, a degassed liquid must be used as the cleaning solution. If a solution from which gas has not been removed is used as the cleaning solution, the generation of gas bubbles may not be prevented. Even if degassed liquid is used as a cleaning solution, it may not prevent 100% of gas bubbles from forming, which leaves the challenge of eliminating intermittent gas bubble blockage of the root canal, which we will discuss later. In order to generate vapor bubbles using degassed liquid as a cleaning solution, the cleaning solution must be subjected to a high acoustic pressure above a certain threshold, as summarized in the table in FIG. 3. A configuration derived by the present inventors for applying high acoustic pressure to the cleaning solution will be described in the immediately following paragraphs.

### <The need for a high-intensity ultrasonic generation unit>.

To generate vapor bubbles, the power (or ultrasonic acoustic pressure) of the ultrasonic generation unit must be high. To achieve high ultrasonic power, not only the ultrasonic vibrator, but also the vibrating parts (scaler tips, files, ultrasonic horns, etc.) that are coupled to the vibrator must have a cross-sectional area of at least a certain size, preferably in the form of a straight line. Conventional dental cleaning devices use thin and curved parts (such as scaler tips or files) for application in the oral cavity, which makes it difficult to utilize high ultrasonic power.

The inventors chose a BLT-type vibrator as the vibrator, and came up with the idea of combining it with a straight-shaped ultrasonic horn. BLT stands for Bolt-clamped Langevin Transducer, and BLT type vibrators are one of several types of vibrators commercially available at the time of completion of the present invention, including nickel vibrators, ferrite vibrators, piezoelectric ceramic vibrators, BLT vibrators, and crystal vibrators. The purpose of using BLT type vibrators is to achieve high ultrasonic power output. To achieve high power output, the diameter of the BLT vibrator was determined to be relatively large, approximately 30 mm. Although the inventors have selected and used the BLT type of vibrator from among the various types of vibrators, it should not be construed as a limitation to the BLT type of vibrator used in the present invention. It should be understood that any type of vibrator can be used and still fall within the scope of the present invention as long as it provides an ultrasonic power output capable of producing vapor bubbles in a degassed liquid.

In addition to the vibrator, another important component is a vibration transmission element that is coupled to the vibrator and transmits the vibrations generated by the vibrator to the fluid medium (coolant and cleaning solution). In this embodiment, a ultrasonic horn is used as the vibration transmission element to transmit the ultrasonic waves generated by the BLT vibrator through the fluid medium into the oral cavity. While this embodiment utilizes a ultrasonic horn as the vibration transmission element, it should be understood that other structures or shapes of vibration transmission elements may be used in addition to the ultrasonic horn. In order to minimize the power loss of the ultrasonic waves produced by the BLT vibrator, it is advantageous to use a straight horn. Since the cleaning device according to the present invention is inserted into the patient's oral cavity during operation, the volume of the ultrasonic horn is necessarily limited, but if the volume of the ultrasonic horn is too small, ultrasonic power losses are induced and vapor bubbles cannot be effectively generated within the degassed liquid, the inventors have devised a straight-shaped ultrasonic horn. The inventors ultimately chose a straight horn with a cross-sectional diameter of approximately 8 mm to be combined with a BLT-type vibrator, and prototypes were manufactured, and the cleaning performance of the prototype was demonstrated by applying it in practice.

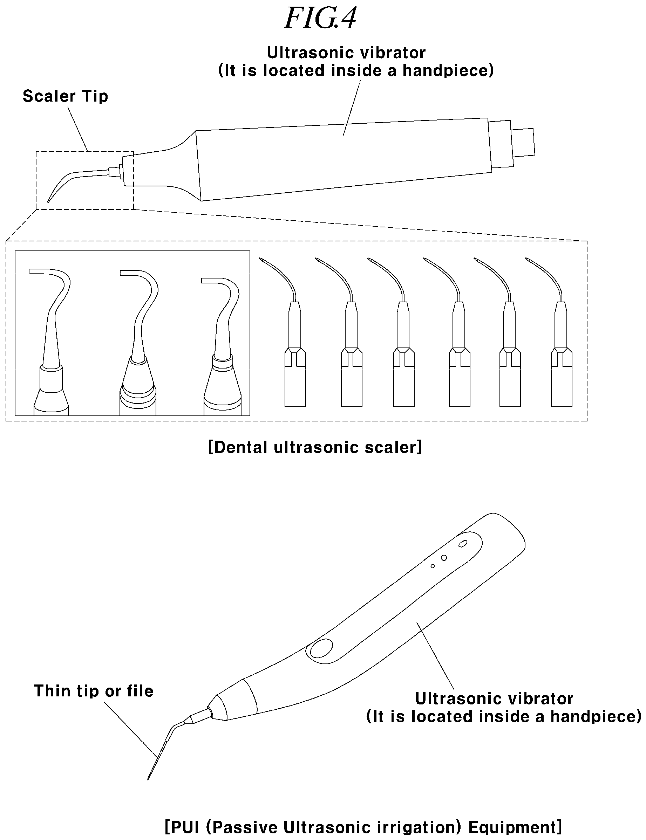

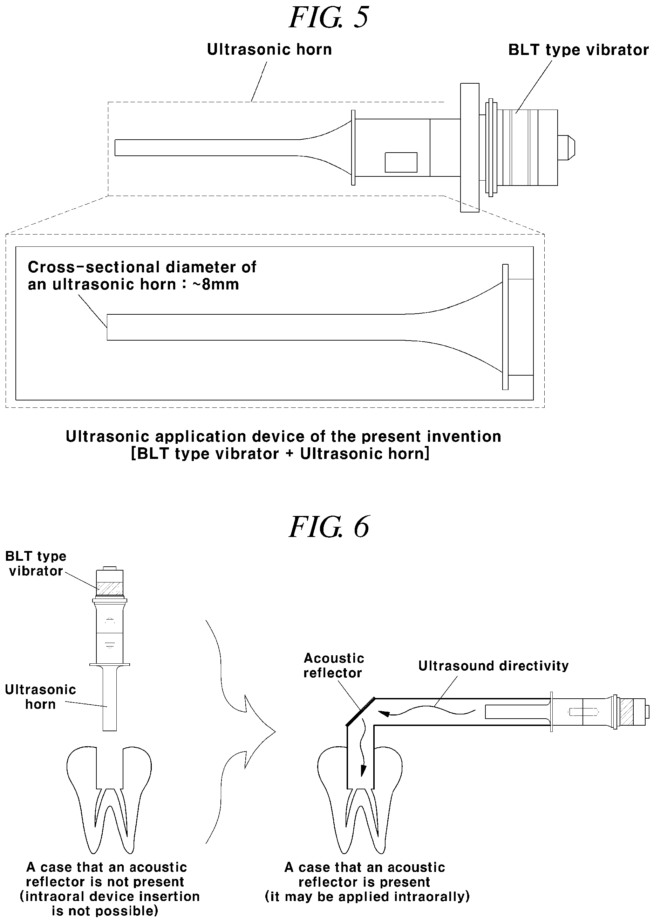

Ultrasonic generators have been used in dental cleaning equipment prior to the present invention. FIG. 4 is a photograph of a conventional dental cleaning device. In contrast, Figure 5 is a photograph of the combined vibrator and horn of a prototype cleaning device according to one embodiment of the present invention. By comparing Figures 4 and 5, the difference between the vibrating component (thin tip or file) of a conventional dental cleaning device using ultrasound and the vibrating component (ultrasonic horn) of the device according to the present invention will be apparent. Prior art dental cleaning devices, such as those shown in FIG. 4, were almost impossible to generate enough ultrasonic power to produce vapor bubbles from a degassed liquid. It is understood that the inventors of the two prior art patents cited in the Background section of this specification, the "121 patent and the "630 patent of Sonendo, U.S.A., recognized the difficulty of generating vapor bubbles from a degassed liquid using an ultrasonic vibration generator due to the physical limitations of the size of a dental device that is inserted into a patient's oral cavity, and circumvented this by utilizing a high velocity and high pressure liquid jet to generate vapor bubbles.

### <Acoustic reflector for introducing powerful ultrasound into the oral cavity>.

FIG. 6 schematically illustrates the function of an acoustic reflector used in a cleaning device according to one embodiment of the present invention. The ultrasonic vibrator and the ultrasonic horn connected with it as shown in FIG. 5 may occur problems when the vibrator and the ultrasonic horn are inserted into the patient's mouth. The use of a straight horn increases the length of the cleaning device. Therefore, there is a need to introduce an additional component to transmit the ultrasonic vibrations generated by the horn to the tooth. The inventors have solved this problem by ensuring that the cleaning device according to one embodiment of the present invention comprises an acoustic reflector as shown in Figure 6. The acoustic reflector is introduced to facilitate positioning of the cleaning device, which includes an ultrasonic generator in the form of a straight line, in the oral cavity. By using the acoustic reflector, high-powered ultrasonic waves can be directed directly into the tooth's access cavity and root canal. Ultrasound waves have a straightness, and the acoustic reflector may function to change the direction of travel of the straight line waves.

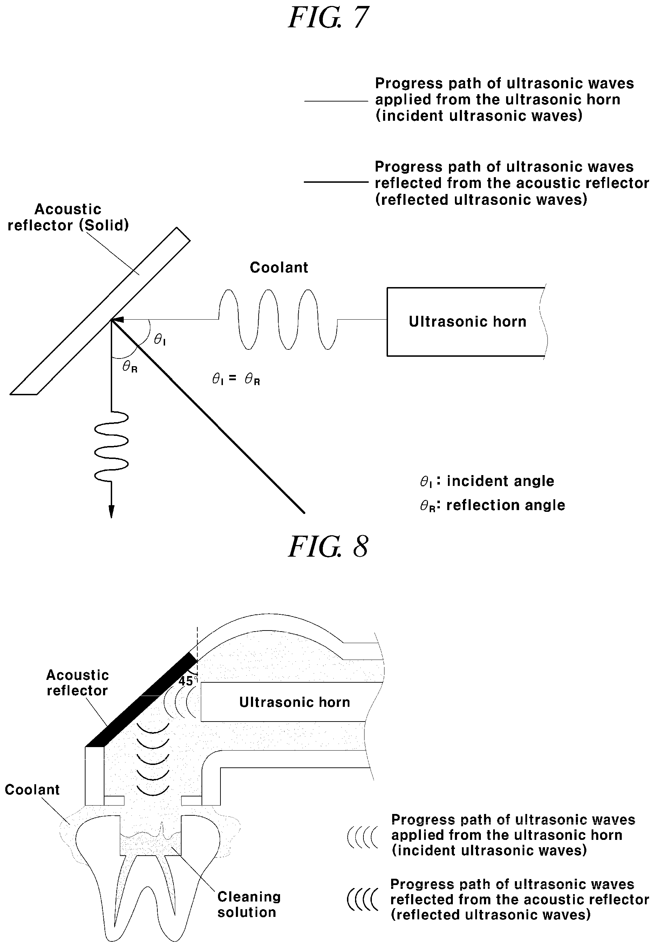

FIG. 7 illustrates the principle of ultrasonic transmission by an acoustic reflector. The ultrasonic waves generated by the ultrasonic horn may propagate in the medium (coolant in the case of the present invention) and generate pressure waves. The ultrasonic waves may propagate in a direction perpendicular to the cross-section of the ultrasonic horn (straightness of the ultrasonic waves). Ultrasonic waves may be reflected when they encounter a medium with a significantly different acoustic impedance (the product of the density and the speed of acoustic wave propagation in each medium). At this time, the direction of the reflected ultrasonic waves follows the principle of angle of incidence and angle of reflection.

FIG. 8 illustrates the direction of vibration being redirected by an acoustic reflector to reach a tooth. As shown in FIG. 8, the acoustic reflector included in the cleaning device according to one embodiment of the present invention, is preferably disposed at an angle of 45 degrees with respect to the cross-section of the ultrasonic ultrasonic horn. As a material for the acoustic reflector, any conventional solid material may be possible. However, a material with a large difference in acoustic impedance from a liquid may have a better reflection efficiency. In this respect, glass or metal materials are preferable to plastic materials. In Figure 8, the acoustic reflector is shown as a flat plate, but the acoustic reflector may have any shape other than a flat plate that can reflect ultrasonic waves.

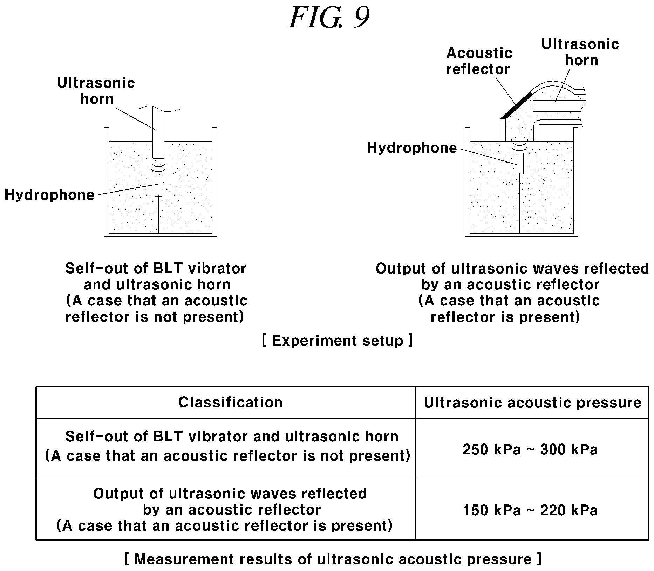

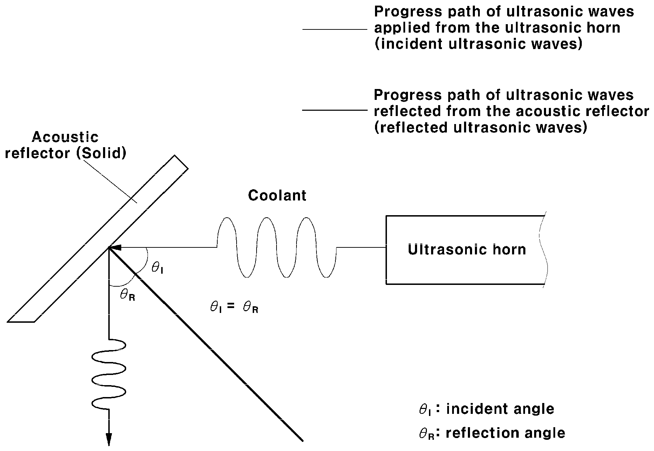

FIG. 19 is a diagram of an experiment to verify the performance of an acoustic reflector by measuring ultrasonic power. The inventors conducted an experiment as shown in FIG. 9 to verify the performance of the acoustic reflector. The ultrasonic acoustic pressure applied by the ultrasonic horn was measured with a hydrophone in both conditions with and without the acoustic reflector, and compared. The results of these experiments showed that ultrasonic waves were still reflected well with the acoustic reflector. However, there was some loss of output (acoustic pressure) due to reflection through the acoustic reflector. As summarized in the table on the right in Figure 9, the power of the ultrasonic wave reflected by the acoustic reflector was measured to be approximately 150 kPa to 220 kPa, which is enough to create vapor bubbles in the degassed liquid.

### <Overall structure of a cleaning device according to one embodiment of the present invention>

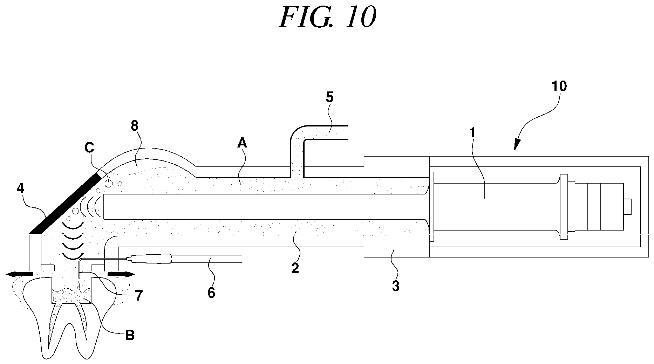

Referring to Figure 10, the overall structure of a cleaning device 10 according to one embodiment of the invention will be described. A cleaning device 10 is an acoustic pressure generating device that vibrates in response to the electrical power input, comprising an oscillator 1 and a straight-shaped ultrasonic horn 2 connected to said oscillator 1. The term "connected" includes a direct connection or an indirect connection via another vibration transmission medium. As used herein, the term "straight" means having an overall straight shape. Even if it is partially bent or somewhat curved, it will be said to be straight as long as it is straight as a whole, i.e. as long as it extends in the longitudinal direction. Both a vibrator 1 and a ultrasonic horn 2 may be housed in a handpiece housing 3. The handpiece housing for housing a vibrator 1 and housing a ultrasonic horn 2 may be separate or integral. Additional advantages may be achieved if a handpiece housing 3 for housing a vibrator 1 is detachable from the rest of the handpiece. After a cleaning treatment, it is hygienically desirable to remove the part that has been in direct or indirect contact with the patient's oral cavity and replace it with a new handpiece device for the next cleaning treatment. It is cost burdened to replace the parts comprising a vibrator 1 and a ultrasonic horn 2. As can be seen from Figure 10, a vibrator 1 may not come into contact with the coolant (A) and cleaning solution (B) applied to the oral cavity and may be located at the farthest position from the patient's oral cavity among the entire handpiece apparatus If a handpiece housing 3 is made detachable so that a handpiece housing 3 housing a vibrator 1 is detachable from the rest of the handpiece, it is possible to replace a handpiece housing 3 housing a vibrator 1 without replacing the rest of a handpiece housing 3 to which it is coupled, which is advantageous for cost savings.

A handpiece housing 3 has a 90 degree bend towards its outlet. An acoustic reflector 4 is installed at this bend. It is a preferable angle that is inclined at 45 degrees with respect to the cross-section of the ultrasonic horn. An acoustic reflector 4 is thus installed so that the ultrasonic waves can be reflected and transmitted to the tooth to be treated. The function, principle and ultrasonic reflection effect of an acoustic reflector 4 have been described in detail in the preceding sections of this specification.

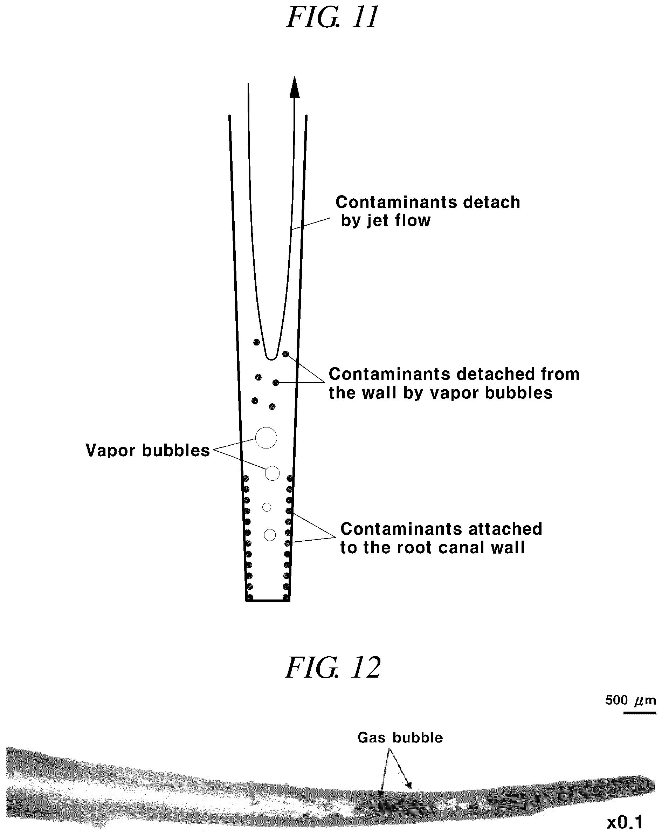

A passage of coolant (A, colored blue in FIG. 11) may be formed inside a handpiece housing 3. A coolant inlet 5 may be formed in a handpiece housing 3, which is in communication with the space inside the handpiece housing, i.e., the coolant passage. A coolant inlet 5 may be connected to a coolant injection pump (not shown), which injects coolant A into the coolant passage inside a handpiece housing 3 through an inlet 5 by applying pressure to the coolant stored in the coolant reservoir. The coolant A injected into the coolant passage through a coolant inlet 5 at the pressure applied by the injection pump may flow toward the open outlet of a handpiece housing 3 while surrounding a ultrasonic horn 2. Although the present embodiment illustrates the use of a coolant injection pump, the coolant A does not necessarily need to flow at a certain pressure or at a certain speed, so that the use of a coolant injection pump may be excluded. The coolant A may perform the function of cooling a ultrasonic horn 2 whose temperature has been raised by the ultrasonic waves. Another important function of the coolant A is to transmit the ultrasonic waves to the cleaning solution B, shown in yellow in Figure 10. As shown by the arrow near the outlet of a handpiece housing 3 in Figure 10, the cooling water A, which cools an ultrasonic horn 2 and transmits ultrasonic waves to the cleaning solution B, may overflow into the gap between the cleaning device and the tooth and be drained. In another embodiment, instead of allowing the cooling water A to overflow into the gap between the cleaning device and the tooth and be discharged, the cooling water A may be sucked up and recovered by adding a separate suction means.

At the outlet of a handpiece housing 3 a cleaning solution nozzle 7 may be arranged for injecting the cleaning solution B into the tooth. A cleaning solution nozzle 7 may be connected to a cleaning solution passage 6, and a cleaning solution passage 6 may be connected to a cleaning solution injection pump (not shown) that provides pressure. While this embodiment illustrates the use of a cleaning solution injection pump, any means other than a pump capable of applying a jet pressure to the cleaning solution discharged through a cleaning solution passage 6 and a nozzle 7 may be employed in the cleaning device according to the invention.

The function of a cleaning solution nozzle 7 is described below. FIG. 11 illustrates the function of a vapor bubble and a nozzle 7 in root canal cleaning. As shown in FIG. 11, contaminants adhering to the root canal wall are detached from the wall by the cleaning force of the vapor bubble. Despite being detached from the wall, contaminants may still remain in the root canal, and a nozzle 7 is necessary to expel them out of the root canal. In Figure 11, a conceptual illustration of "contaminant evacuation by jet flow" is shown by the red broken arrow. The cleaning solution introduced into the root canal by a nozzle 7 into the access cavity of the tooth creates a jet flow within the root canal, which detach contaminants from the walls due to the cleaning action of the vapor bubbles and expels them outside the root canal. The jet flow generated by a nozzle 7 also solves the problem of gas bubbles blocking the root canal and preventing cleaning.

FIG. 12 is a photograph of a gas bubble blocking a root canal model and preventing cleaning. One of the features of the present invention is the use of a degassed liquid as a coolant (A) and a cleaning solution (B), and by this feature, the occurrence of gas bubbles in the root canal during cleaning may be suppressed as much as possible. However, a degassed liquid cannot be guaranteed to be 100% degassed. Therefore, gas bubbles are also intermittently generated by the strong ultrasonic acoustic pressure that generates vapor bubbles in the degassed liquid. As described in the section of the present specification concerning the characteristics of gas bubbles and vapor bubbles, the survival time of gas bubbles is longer than that of vapor bubbles. And therefore, when gas bubbles block the root canal, they must be removed by applying an external force, as the cleaning of the area blocked by the gas bubbles cannot be effectively performed for an extended period. The present inventors have confirmed that the jet flow generated by a nozzle 7 exerts an external force on the gas bubbles blocked in the root canal and facilitates their discharge outside the root canal. Conversely, it has also been confirmed that the gas bubbles are not expelled in a structure that does not utilize a nozzle 7. Next, the risk of apical extrusion induced by a nozzle 7 is described.

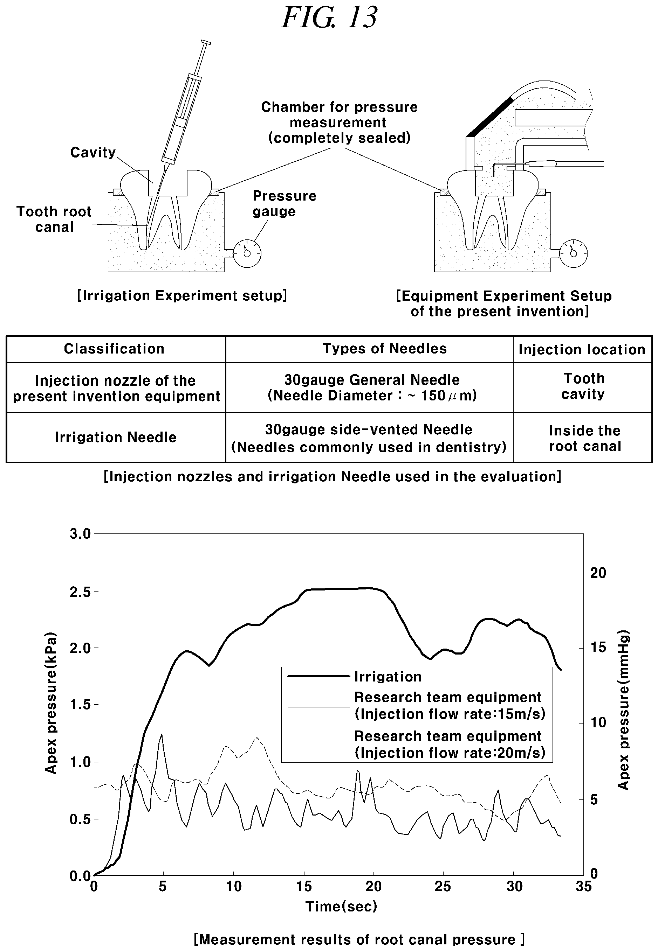

Figure 13 illustrates an experiment to evaluate the risk of apical extrusion induced by a nozzle 7 employed in a cleaning device according to one embodiment of the present invention. The inventors compared the risk of apical extrusion induced by the jet nozzle 7 employed in the cleaning device according to one embodiment of the present invention with needle irrigation (a method conventionally used for cleaning tooth) by measuring the apical pressure. The higher the pressure at the root canal apex, the greater the risk of leakage in clinical practice. The left side of Figure 13 shows both the method currently used in dentistry for root canal cleaning and the method according to one embodiment of the present invention. The diameter of the needle, which functions as a jet nozzle, is the same in both cases, 30 gauge (150 µm). However, the needle employed in the cleaning device according to the present invention may be a regular needle, whereas the needle employed in the conventional syringe cleaning device as a control is a needle with a side-vented structure. The side-vented needle was adopted to solve the problem of excessive pressure on the root canal apex when using a regular needle in the prior art. The most significant difference between the two is the jet position of the needle. In a conventional device, the cleaning solution is sprayed on the root canal opening in order to inject the cleaning solution into the root canal. In contrast, in one embodiment of the present invention, the cleaning solution may be injected into the access cavity, which is located some distance away from the root canal. The periapical pressure of the cleaning device according to one embodiment of the present invention was measured to be much lower than that of the prior art in both the 15 m/s and 20 m/s cases, and it can be evaluated that the use of the cleaning device according to one embodiment of the present invention in terms of risk of apical extrusion has resulted in significantly increased stability compared to the prior art.

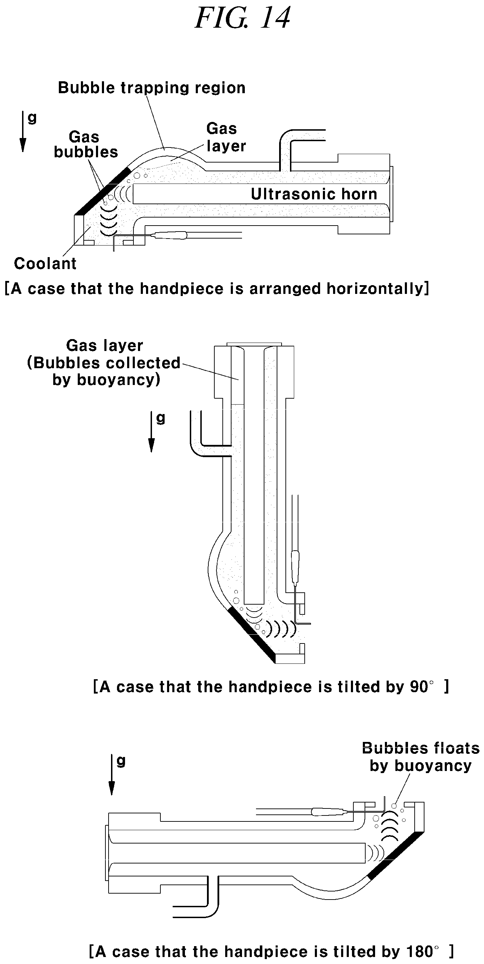

Next, with reference to Figures 10 and 14, one of the unique features of the present invention, the bubble trapping region installed in a handpiece housing 3, will be described. The bubble trapping region is indicated by the drawing symbol 8 in Figure 10. A bubble trapping region 8 may be designed to trap enlarged bubbles C in one place. When the bubbles C, which are undesirably generated gas bubbles, gather in the vicinity of an acoustic reflector 4, the ultrasonic transmission efficiency drops sharply. The inventors have provided a bubble trapping region 8 in a handpiece housing 3 so that the bubbles C that have merged and increased in size can float buoyantly and be trapped in a specific region. A bubble trapping region 8 may be dome-shaped as shown in Figures 10 and 14, but may have any shape as long as the bubbles C can be trapped. Since a bubble trapping region 8 is intended to capture bubbles C that collect in the vicinity of an acoustic reflector 4, it is preferred that the location where this region is formed is near an acoustic reflector 4 within a handpiece housing 3. A bubble trapping region 8 is provided at the end of the upper surface of a handpiece housing 3 that connects with an acoustic reflector 4, which is inclined at a 45-degree angle as shown in Figures 10 and 14. Therefore, it is advantageous for capturing bubbles C that gather near an acoustic reflector 4 and reduce the efficiency of ultrasonic reflection. The left state of the three states illustrated in FIG. 14 illustrates a state in which the cleaning device according to one embodiment of the present invention is used correctly, i.e., the handpiece of the cleaning device is used horizontally. As such, a bubble trapping region 8 is required when the handpiece of the cleaning device is horizontally positioned. When the handpiece is tilted, such as in the center and right states of FIG. 14, bubbles do not collect in the vicinity of an acoustic reflector 4. It is to be understood as one of the important features of the present invention that in the cleaning device according to the present invention used with the handpiece horizontal, the bubbles C are trapped within a bubble trapping region 8 to maintain good ultrasonic reflection efficiency.

Using the cleaning device of the above-described structure, the inventors have verified the cleaning effectiveness. The cleaning conditions are summarized in the [Table 1].

**[Table 1]**

| | |
|---|---|
| Cleaning solution | Degassed NaOCl (2.5 wt%) |
| Coolant | Degassed water |
| Cleaning time | Approximately 6 minutes |
| A diameter of Spray nozzle | 30 gauge (150 µm) |
| Jet flow rate | 20 m/s |
| Periapical conditions | Blocked |

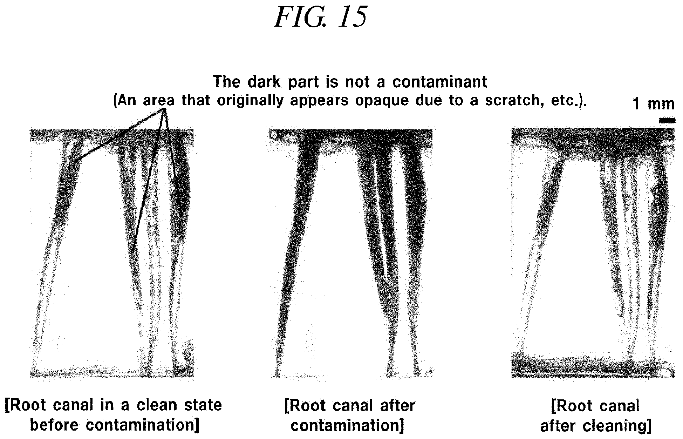

In order to artificially create an environment that is difficult to clean, the present inventors applied a condition in which the root canal apex is closed as specified in the above table. If effective cleaning is possible in a condition with a blocked root canal apex, the effectiveness of cleaning in a condition with an open root canal is sufficiently guaranteed. The inventors conducted experiments using a transparent root canal model as shown in FIG. 15, observed the root canal cleaning process, and identified three important results. First, when the root canal model was cleaned using the cleaning device according to one embodiment of the present invention, it was found that simultaneous multi-root canal cleaning was achieved to a level equivalent to that of the root canal before contamination. Second, it was confirmed that vapor bubbles were generated in the root canal even under the condition of using both cleaning solution (B) and cooling water (A) as degassed liquid, and that cleaning was performed by their action. Third, it was confirmed that gas bubbles were intermittently formed and blocked the narrow and thin root canal, but were discharged out of the root canal by the jet flow of a nozzle 7.

Finally, the conditions of ultrasonic acoustic pressure and jet pressure of the cleaning solution in a cleaning device according to one embodiment of the present invention are described.

As a result of repeated experiments conducted by the present inventors to generate vapor bubbles from a degassed liquid, it was found that the threshold value of ultrasonic acoustic pressure is approximately 80 kPa. In order to generate an ultrasonic acoustic pressure exceeding the above-described threshold value to smoothly generate vapor bubbles from the degassed liquid, the ultrasonic acoustic pressure generated by the acoustic pressure generator of the prototype of the cleaning device actually generated by the present inventors is between 150 kPa and 220 kPa. On the other hand, the present inventors sprayed the cleaning solution B at a spray pressure of approximately 6 bar to 12 bar from a nozzle 7 mounted on the prototype cleaning device. When applying such a jet pressure, the jet velocity of the cleaning solution B from a nozzle 7 was approximately 15 m/s to 20 m/s. The ultrasonic acoustic pressure, jet pressure and jet velocity described above are exemplary and do not limit the structure of the cleaning device according to the invention. These figures are to be utilized for reference purposes only to the extent that the ultrasonic acoustic pressure, jet pressure and jet velocity may be realized in approximately these ranges when using the cleaning apparatus according to the present invention, and that smooth cleaning is possible.

The liquid jets used in the US patents of Sonendo described in the Background section of this specification have a jet pressure of at least 7000 psi (approximately 483 bar) and a jet velocity of at least 50 m/s. When these figures are compared to the jet pressure and jet speed implemented for root canal cleaning in the cleaning device according to the present invention, it will be clearly understood that the representative effect of the present invention is that it is possible to maximize the cleaning effect while spraying the cleaning solution at a low speed and low pressure compared to the prior art that uses a high-speed and high-pressure liquid jet for root canal cleaning, and thus provide a root canal cleaning device that is much more advanced in terms of safety while reducing the production cost of the equipment.

While the invention has been described above with reference to specific details, such as specific components, and with reference to limited embodiments and drawings, these are provided for the purpose of providing a more general understanding of the invention, and are not intended to limit the invention to these embodiments, and various modifications and variations may be made from these descriptions by one having ordinary skill in the art to which the invention belongs.

Accordingly, the idea of the invention is not to be limited to the embodiments described above, and it will be understood that the following patent claims, as well as all equivalents or equivalent modifications of these claims, fall within the scope of the idea of the invention.

## Claims

1. A root canal cleaning device comprising:
an acoustic pressure generating unit that operates in response to the electrical input;
a handpiece housing that accommodates the acoustic pressure generating unit;
a coolant passage formed inside the handpiece housing;
a coolant inlet that communicates with the coolant passage formed inside the handpiece housing; and
a cleaning solution nozzle formed in the handpiece housing,
wherein an ultrasonic acoustic pressure applied to a coolant by the acoustic pressure generating unit is transmitted to a cleaning solution, and vapor bubbles are generated in the cleaning solution by the transmitted ultrasonic acoustic pressure, and target contaminants inside the tooth including the root canal is removed by the action of the vapor bubbles and the cleaning solution on a tooth being treated, and
wherein the cleaning solution includes a degassed liquid.

2. The device of claim 1, wherein the coolant cools the acoustic pressure generating unit, and the coolant includes a degassed liquid.

3. The device of claim 2, wherein the acoustic pressure generating unit includes a vibrator that vibrates in response to the electrical input and a ultrasonic horn that is connected to the vibrator, vibrates and has a shape extending in a straight line.

4. The device of claim 3, wherein a jet stream formed within the root canal by the cleaning solution nozzle discharges gas bubbles blocking a passage of the root canal and/or contaminants detached from the root canal to an outside of the root canal.

5. The device of claim 4, wherein the handpiece housing has a bent shape at one end, and an acoustic reflector is positioned at the bent shape, such that the ultrasonic waves applied to the coolant by the ultrasonic horn are reflected by the acoustic reflector.

6. The device of claim 5, wherein the acoustic reflector is inclined at a predetermined angle with respect to the cross section of the ultrasonic horn.

7. The device of claim 6, wherein a bubble trapping region is formed on an upper surface of the handpiece housing, and
wherein the bubble trapping region traps bubbles that gather near the acoustic reflector and rise by buoyancy.

8. The device of claim 7, wherein the cleaning solution nozzle is configured with a specified length to spray the cleaning solution into an access cavity of the tooth during root canal cleaning.
